# EUROPEAN PATENT SPECIFICATION

(11) **EP 2 525 932 B1**
(45) Date of publication and mention of the grant of the patent: **13.11.2013**
(21) Application number: 11700147.9
(22) Date of filing: 14.01.2011
(51) Int. Cl.: B23B 31/12, B25B 13/44, B25F 3/00

(54) **ADJUSTABLE SOCKET DEVICE**
EINSTELLBARE BUCHSENVORRICHTUNG
DISPOSITIF À DOUILLE RÉGLABLE

(30) Priority: 18.01.2010 IT BO20100022
(43) Date of publication of application: 28.11.2012
(73) Proprietor: A.L.F.A. Costruzioni Metalmeccaniche S.R.L., 61043 Cagli (PU) (IT)
(72) Inventor: TRAVERSI, Alessandro, I-61043 Cagli (PU) (IT)
(74) Representative: Negrini, Elena
(86) International application number: PCT/EP2011/050445
(87) International publication number: WO 2011/086148

(56) References cited:
- DE-A1- 2 131 732
- JP-A- 2009 202 321
- SU-A1- 1 404 190
- US-A- 1 564 768
- US-A- 3 618 961
- US-A- 4 580 483
- US-A- 5 819 607
- US-A- 5 918 511
- US-A1- 2004 140 629

## Description

### TECHNICAL FIELD

The present invention is framed into the technical field of the mechanical tools and it refers to an adjustable socket drive device in accordance with the preamble of claim 1 for bolt or nut driver tool, for drills, for device and machine tools and especially assigned to engage various sizes of hexagonal nuts or bolts and to tighten or to loose them and assigned, similarly to a mandrel, to engage the cylindrical or hexagonal stems of drilling bits, of twist bits or of other rotating tools.

### BACKGROUND ART

The known hand or powered bolt driver tools have a rotating link assigned to be connected to various known hexagonal socket drives each provided with a hexagonal seat having a respective size corresponding to the size of the hexagonal socket heads of the bolts or nuts to be screwed or unscrewed.

A drawback of said known not adjustable hexagonal socket drives consists in that they must be replaced to fit different sizes of hexagonal socket head of bolts or nuts to be engaged.

A further drawback of said hexagonal socket drives consists in that they can match hexagonal socket heads only.

Document n. DE 21 31 732 discloses an adjustable socket drive device in accordance with the preamble of claim 1 comprising a body means provided with a plurality of cylindrical seats, each assigned to house in a freely swivelling manner a respective stem means having a respective eccentric and elongated jaw means protruding outward in respect of the corresponding housing.

Said known device comprises rotating means engaged to the stem means for rotating them and the jaw means for adjusting the mutual distance thereof to the various sizes of the nuts, bolts or stems.

### DISCLOSURE OF THE INVENTION

An object of the present invention is to propose an alternative socket drive device adjustable between two extreme minimum and maximum sizes, for engaging heads and cylindrical or hexagonal stems whose sizes range between said minimum and maximum.

Further object is to propose a simple, effective and reliable device.

Another object is to propose an alternative adjustable socket drive device also operating as a mandrel for drills and rotating tools that can be engaged to various sizes of twist bit stems, disk saws stems, milling cutter stems and other rotating tools.

Further object is to propose an alternative adjustable socket drive device that can be tightened on hexagonal or cylindrical heads and stems by hand, without the need of spanner, tools or the like.

These objectives are achieved by means of a device according to claim 1.

### BRIEF DESCRIPTION OF THE DRAWINGS

The features of the invention are highlighted in the following whit particular reference to the enclosed drawings in which:
- figure 1 shows a front view of an embodiment of the adjustable socket drive device object of the present invention;
- figure 2 shows a view sectioned according to the plane II - II of figure 1;
- figure 3 shows an axial view of the device of figure 1;
- figures 4 and 5 show section views respectively according to planes IV - IV and V - V of figure 1;
- figure 6 shows an axonometric view of the device of figure 1;
- figure 7 shows an exploded and axonometric view of the device of figure 1;
- figures 8 - 10 show axial views of the device of figure 1 in different adjustment conditions for rotating nuts of different sizes;
- figure 11 shows a front view of a different embodiment of the device of figure 1;
- figure 12 shows a section view according to the plane XII - XII of the embodiment of figure 11;
- figure 13 shows an axial view of the device of figure 11;
- figures 14 and 15 show section views respectively according to plans XIV - XIV and XV - XV of figure 11;
- figure 16 shows an axonometric view of the device of figure 11;
- figure 17 shows an axonometric and exploded view of the device of figure 11;
- figure 18 shows a section view according to a longitudinal axial plane of a further embodiment of the device of figure 1;
- figures 19 and 20 show views sectioned by planes respectively XIX - XIX and XX - XX of figure 18;
- figure 21 shows an exploded and axonometric view of the device of figure 18;
- figures 22 - 24 show respectively side, axial and axonometric views of the preferred embodiment of the device object of the present invention;
- figure 25 shows a view sectioned according to plane XXV - XXV of figure 22;
- figures 26 and 27 show views of the device of figure 22 sectioned according to planes XXVI - XXVI and XXVII - XXVII of figure 25;
- figures 28 and 29 show respective enlarged portions of figure 25;
- figure 30 shows an axonometric and exploded view of figure 22;
- figures 31-33 show axial views of the device of figure 22 in conditions of engagement with nuts of various sizes.

### EMBODIMENTS OF THE INVENTION

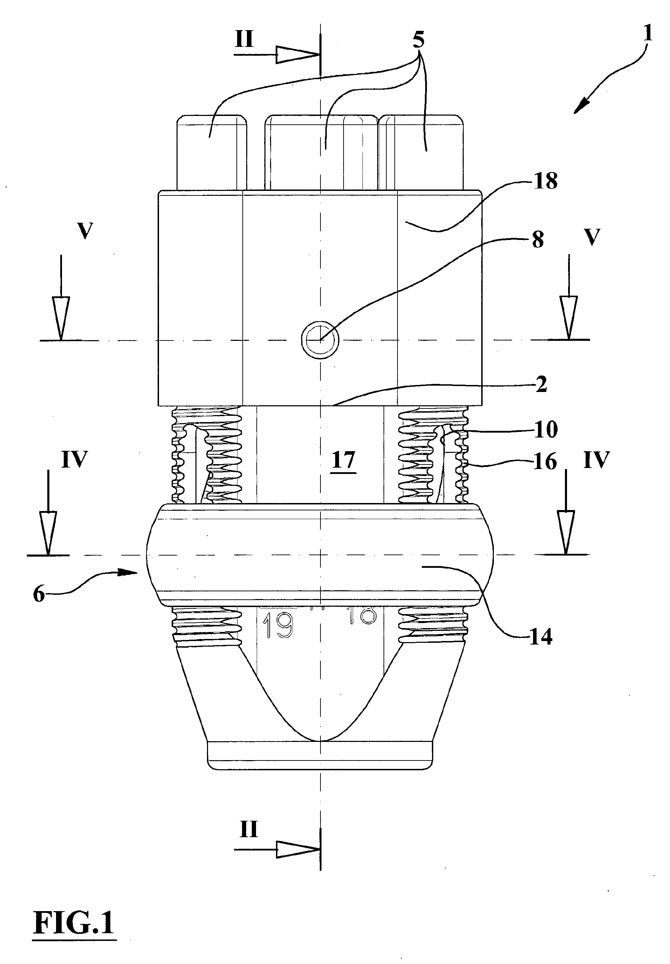

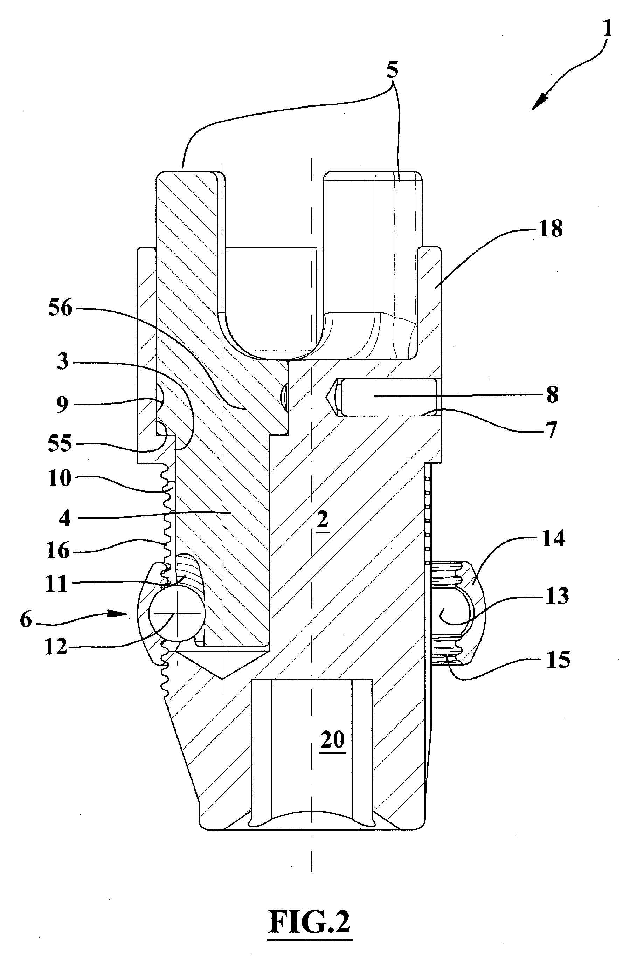

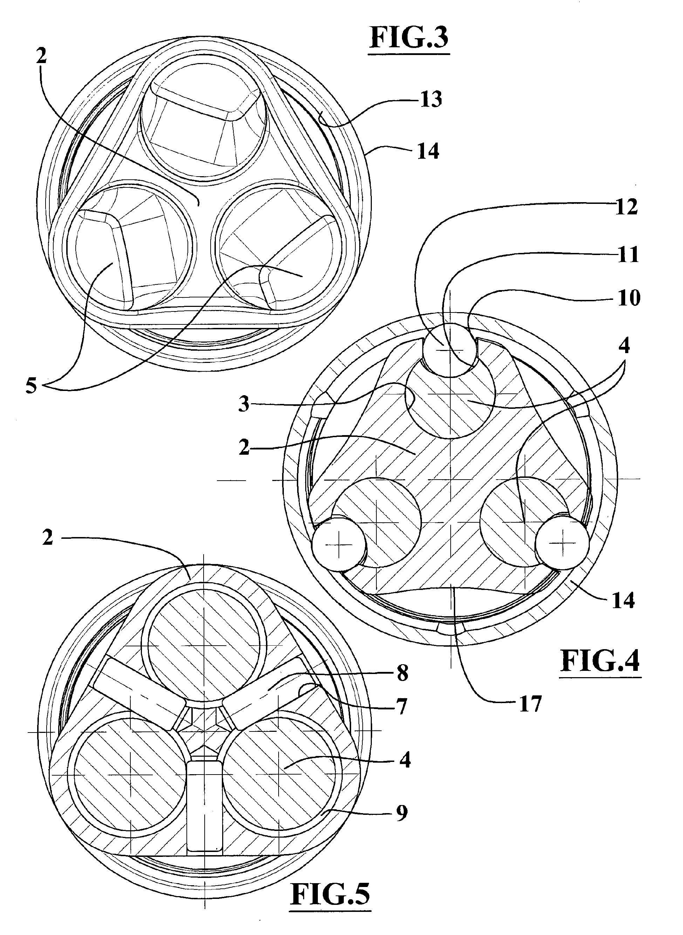

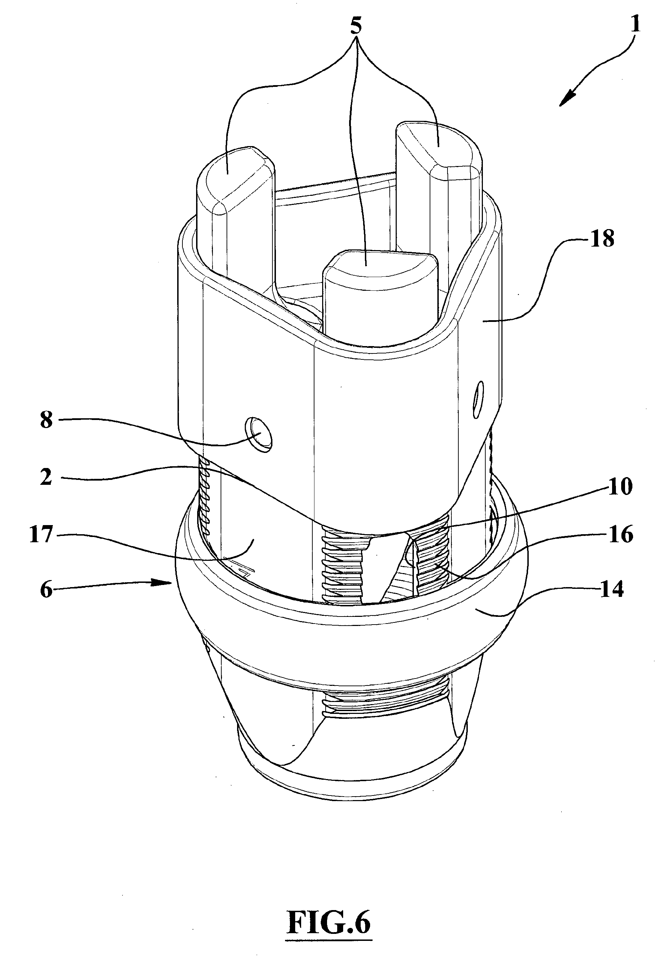

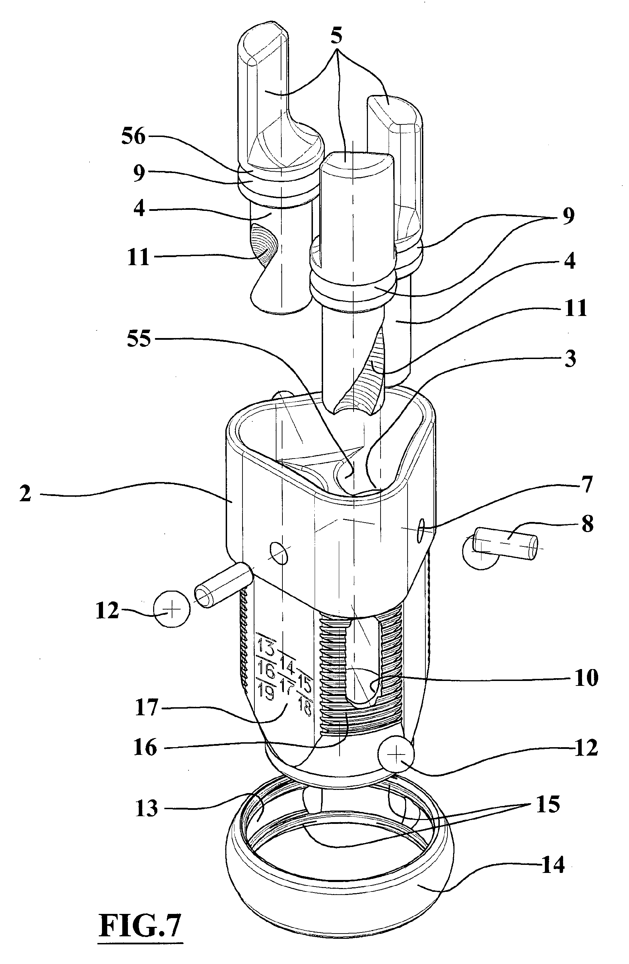

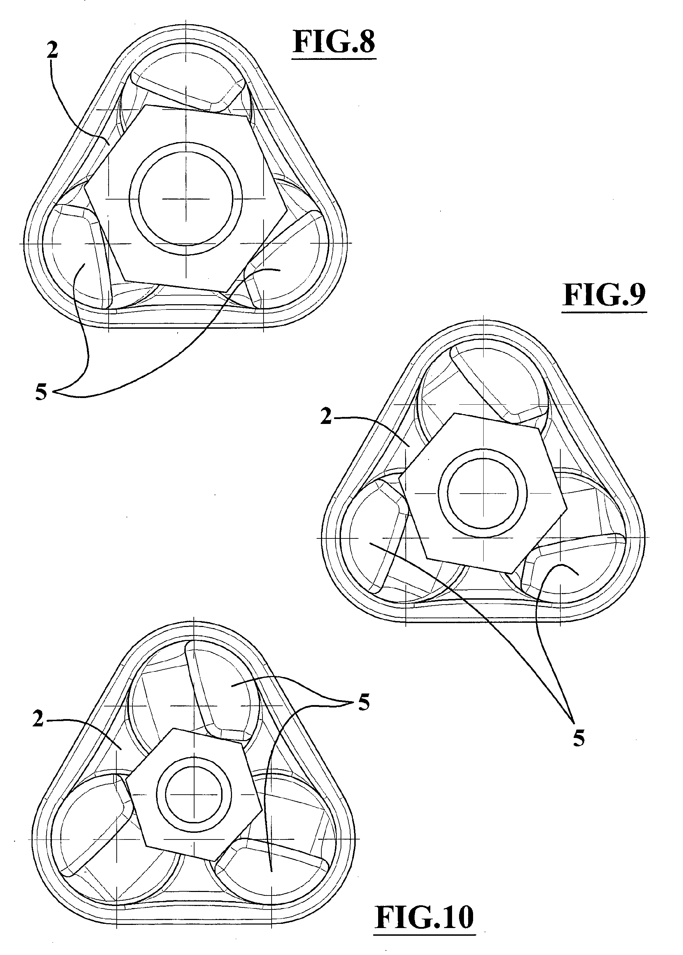

Referring to figures 1 - 10, 1 indicates a simplified embodiment of the adjustable socket drive device, object of the present invention, associable to mounts, adjustable spanner, drills, manual or powered tool drives and the like and assigned to engage or to grab nuts and bolts or stems of bits and of rotating tools and in general for hexagonal heads or cylindrical stems.

The device 1 comprises a body means 2, for instance made of ferrous metal, cylinder or regular prism shaped and having a main longitudinal geometric axis.

In the body means 2 are carried out, for instance by means of drilling, three cylindrical seats 3 whose main geometric axes are parallel to the main geometric axes of the body means 2 and they cut perpendicularly the vertexes of an equilateral triangle.

Each cylindrical seat 3 is assigned to house, in a freely swivelling manner, a respective cylindrical stem means 4.

Each of the three cylindrical stem means 4 has a respective eccentric elongated jaw means 5 protruding outward the cylindrical seats 3 and outward the body means 2.

The portion of the body means 2 where outflow the cylindrical seats 3 has a side wall 18, approximatively cup shaped, partially containing the jaw means 5 without separation of said jaw means 5.

The end of the body means 2 opposed to the jaw means 5 and to the side wall 18 is provided with a socket connection or link 20 for a manual operated tool or for a drill or the like.

Said device 1 further comprises rotating means 6 engaged to each stem means 4 for the rotation of said stem means 4 and of the jaw means 5 adjusting the distance between said jaw means 5 for housing nuts, bolts and hexagonal or cylindrical stems of various sizes.

In alternative the invention provides that the number of stem means 4 and of jaw means 5 can differ from three or that one or two of the jaw means 5 can be fixed. In this latter case the alignment and the centreing of the device with the hexagonal or cylindrical elements are not reached.

The geometric generatrix of the portions of the side surfaces of the elongated jaw means 5 assigned to match with nuts, bolts, stems, etc., are straight and parallel to the main geometric axes of the cylindrical stem means 4 and of the cylindrical seats 3.

Each jaw means 5 is inscribed in a cylindrical geometric wall coaxial to the respective stem means 4 and preferably having diameter bigger then the diameter of the stem means 4.

The transverse section of said jaw means 5 is unsymmetrical and preferably it has three main sides forming a kind of triangle whose vertexes are rounded.

The biggest of said sides consists in the circumference arch made by the intersection of the transversal section plane with said cylindrical geometric wall.

The two remaining sides, whose common vertex is bevelled by means of a rounding off having a predetermined radius, have very different lengths, for instance the smaller one ranges between one quarter and one half of the bigger one.

Said two remaining sides of the transversal section are convex and slightly curved shaped and they form an interposed angle of about 90° o preferably bigger.

Said structure of the jaw means allows the matching with the sides of the hexagonal heads and nuts far from the axial geometrical planes of the said heads, so helping the forces and torque transmission. Furthermore said jaw means can also grab cylindrical stems.

The body means 2 comprises three cylindrical shaped first concave radial seats 7, each located between two cylindrical seats 3 and interfering with said seats 3.

Said first concave radial seats 7 are assigned to be engaged by respective pin means 8 that thus enter partially and tangentially into the cylindrical seats 3.

Each stem means 4 is provided with an annular concave seat 9 assigned to be engaged by two pin means 8 that allow the free rotation of the stem means 4 avoiding the axial sliding thereof 4.

The rotating means 6 comprise three slots 10 elongated and parallel to the main geometric axes of the body means 2.

Each slot 10 crosses the body means where said body release the wall of the respective cylindrical seat 3, releasing a communication between a side portion of the latter 3 with the outside.

The rotating means 6 comprise three scores 11 concave and helicoidal shaped, each 11 made in a respective stem means 4.

In alternative, said slots 10 can be helicoidal shaped and the scores 11 can be parallel in respect to the geometric axes of the cylindrical seats 3, in other word of the respective stem means.

The rotating means 6 further comprise three coupling means 12, for instance pin shaped or preferably sphere shaped, each of them is engaged into a corresponding slot 10 and into the respective score 11.

The external end of each coupling means 12 is at least partially housed in a groove 13 of an operating means 14 of the rotating means 6.

Said operating means 14 translates along the body means 2 for controlling the rotation of the jaw means 5 and their mutual distance.

Said operating means 14 is annular shaped and its inner face is provided with the groove 13 having annular concave shape; furthermore, said inner face of the operating means 14 is provided with at least one female threading 15 engaged to at least a male thread 16 made onto the external face of the body means 2 at least close to the slots 10.

The rotation of the operating means 14 causes its axial translation and, by means of the spheres of the coupling means 12, the rotation of the jaw means 5.

Obviously the helicoidal scores 11 are phased in respect to the respective jaw means 5 for the synchronous and consistent rotation of the latter 5

The portions 17 of the external face of the body means 2 interposed between the male threads 16 are almost flat.

At least one of said flat portions 17 is provided with a scale referring to the axial position of the operating means 14 along the body means 2 to gauge in millimetres and/or in inches the jaw means 5 adjustment for the size of an hexagonal nut engaged or to be engaged.

The operation of the device provides that it can be adjusted manually acting on the operating means 14 for adjusting the jaw means 5 for various sizes of heads, nuts and hexagonal or cylindrical stems.

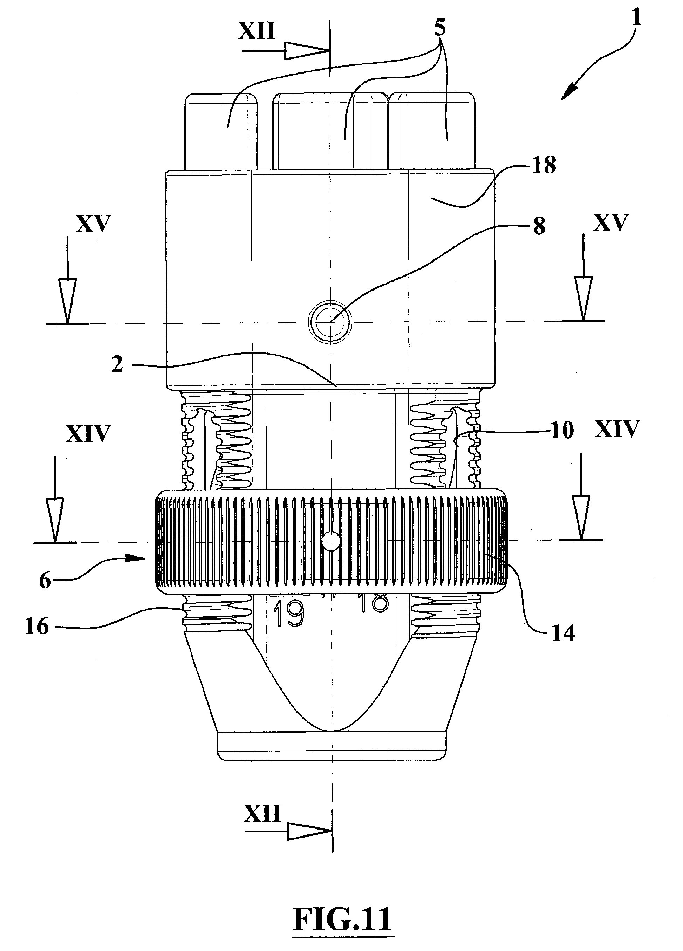

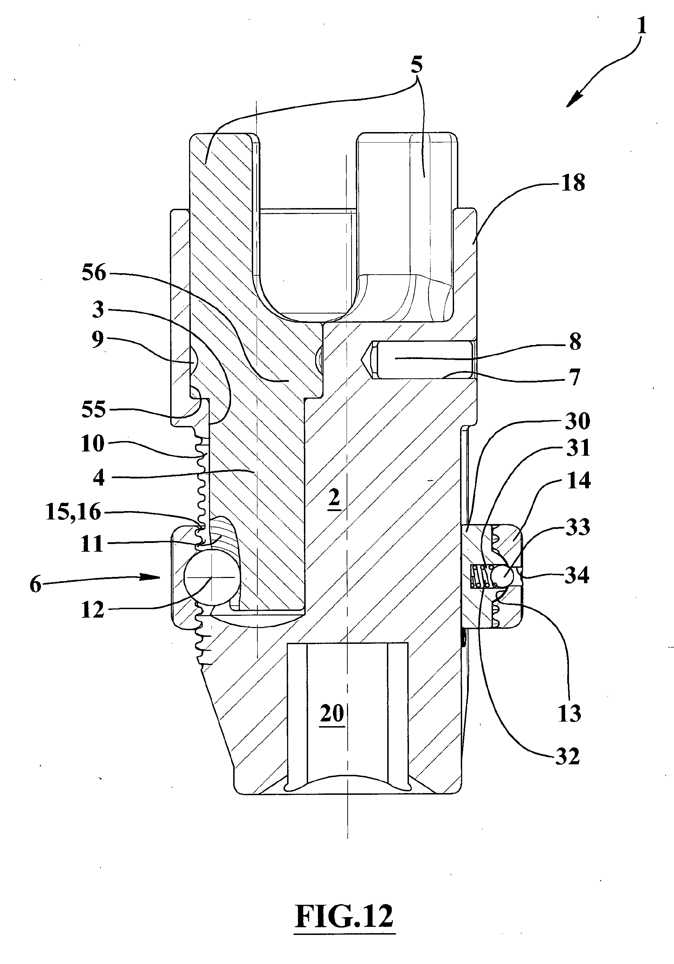

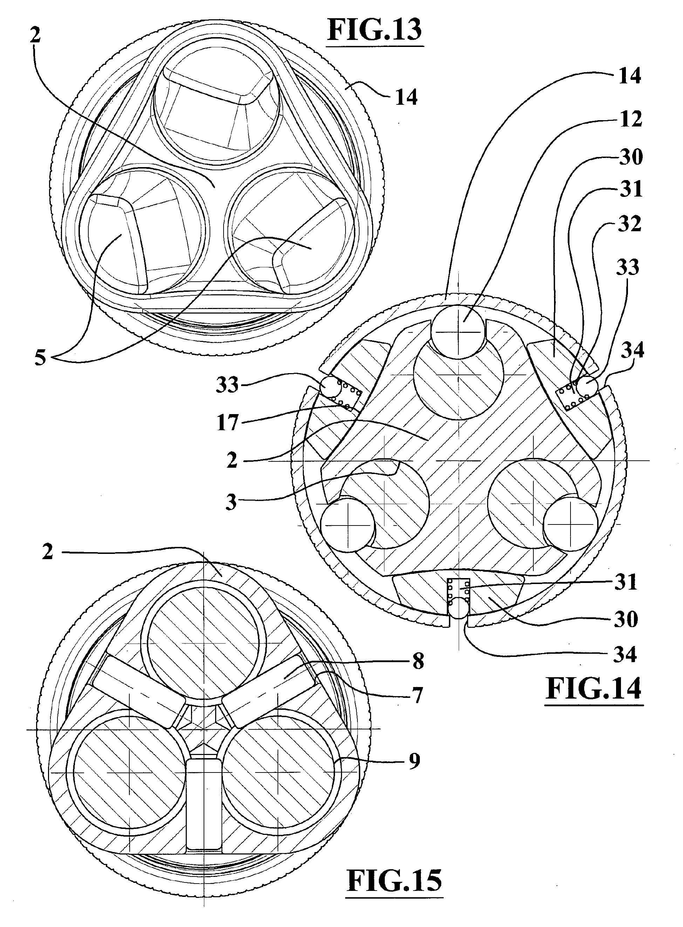

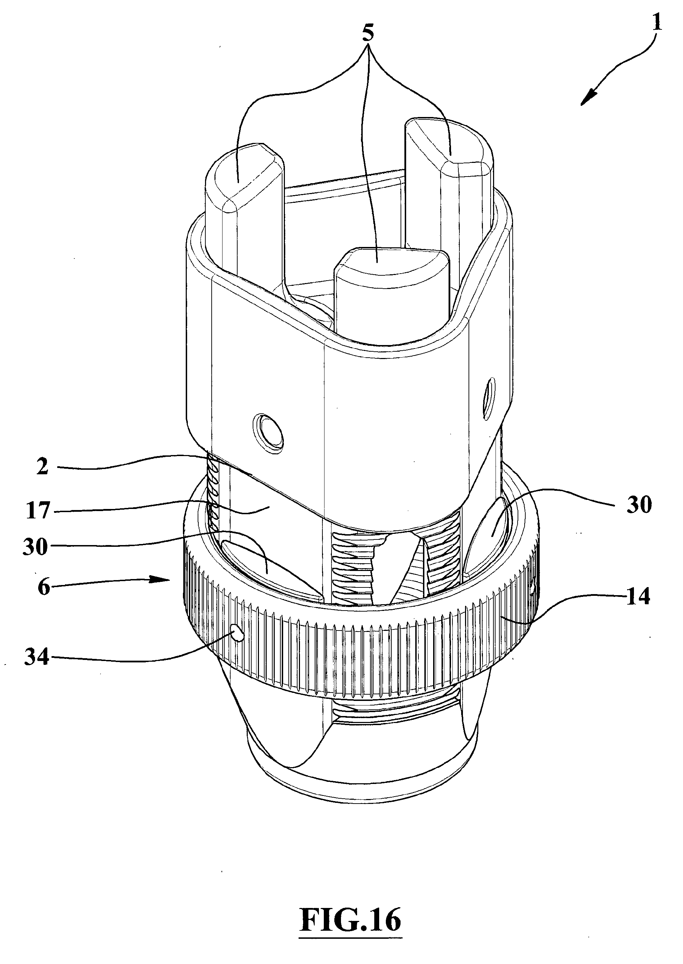

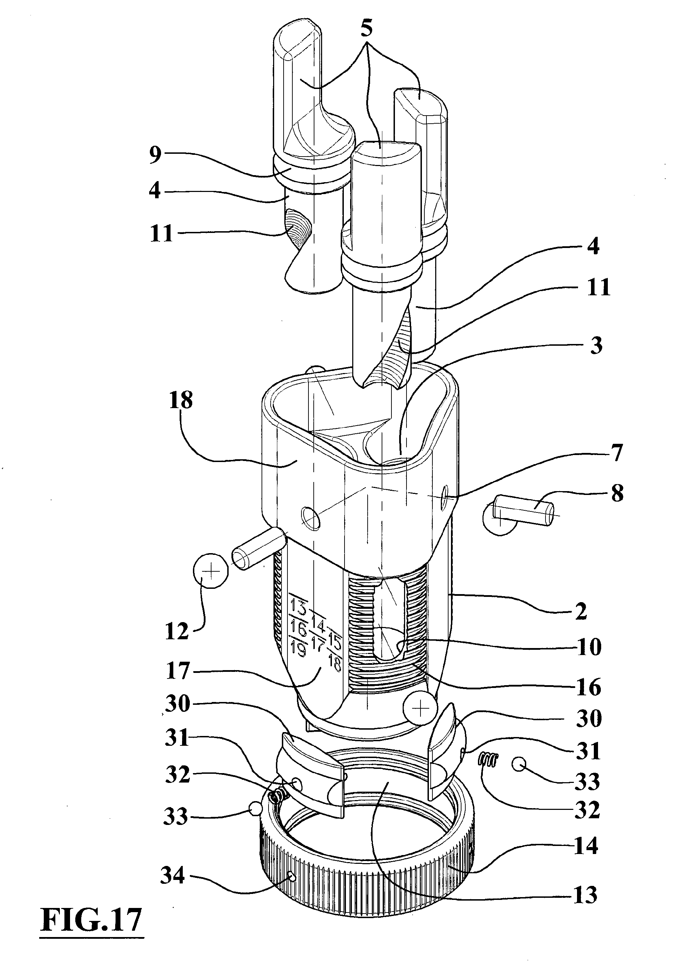

In the further embodiment of figure 11 - 17, the portions 17 of the external face of the body means 2 are slightly concave.

Said embodiment comprises a set of sliding blocks 30, for instance three or less, each interposed between a portion 17 and the annular operating means 14.

Each sliding block 30 is complementary shaped in respect to the groove 13 and to the portion 17 to avoid disengagement from the operating means 14 and to follow it 14 along the longitudinal translation thereof 14.

Each sliding block 30 is provided with a radial hole 31 opened only towards the outside and housing a spring 32 and a sphere 33.

Said sphere 33 elastically matches with the surface of the groove 13 that is provided with stop holes 34 assigned to detachably block the spheres 33 and the rotation of the annular operating means 14 in correspondence of predetermined distance among the jaw means 5 corresponding to precise sizes of the hexagonal heads.

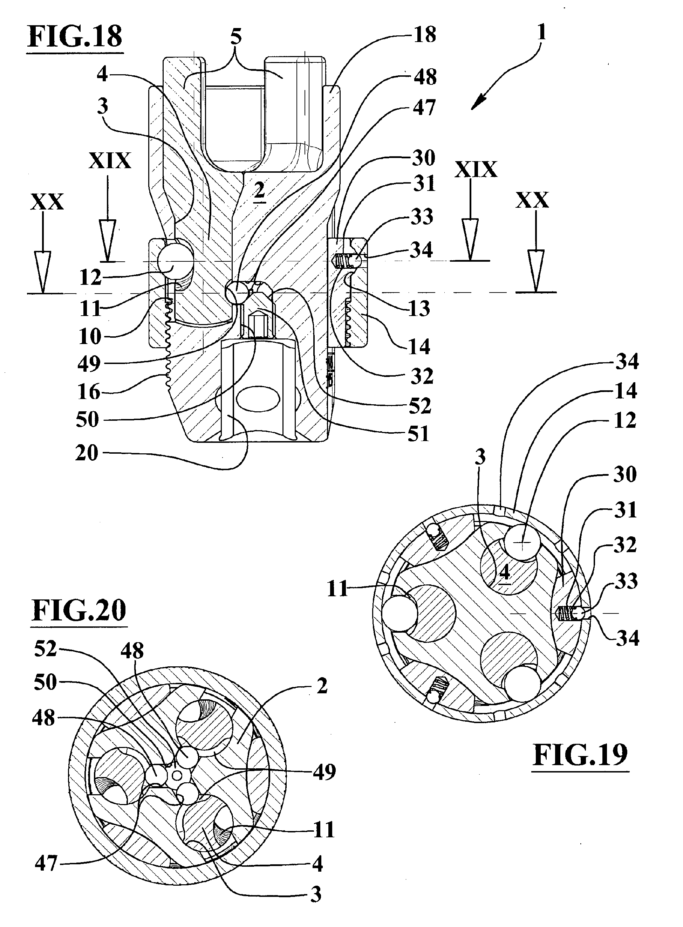

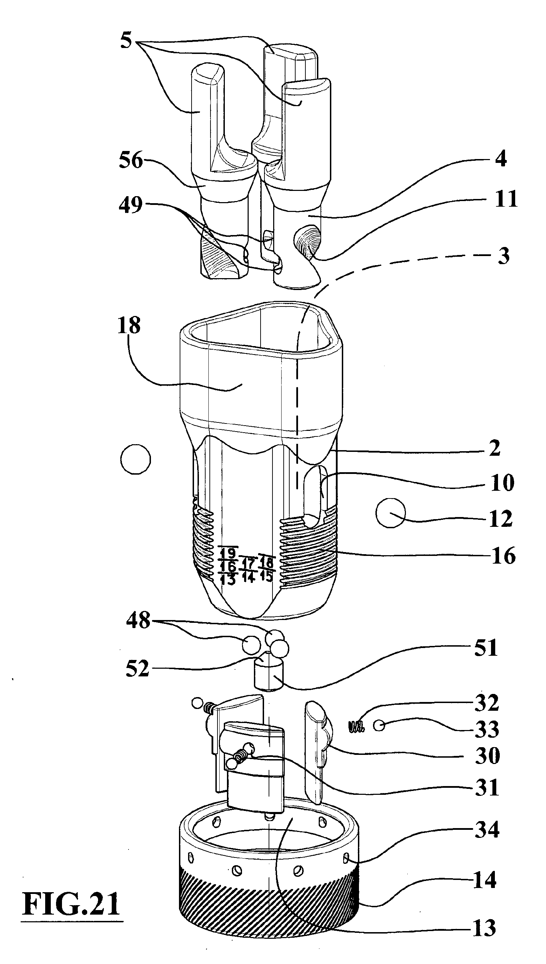

The further embodiment of the device of figures 18 - 21, does not comprise the pin means 8 of figures 1, 11, but it is provided with other means assigned to avoid the taking off of the stem means 4 and of the jaw means 5 allowing the axial rotation thereof 4,5.

This further embodiment provides that the body means 2 includes a set of concave cylindrical shaped second radial seats 47 radial oriented in respect to the longitudinal geometric axes of the body means 2.

One end of each second seat 47 flows into respective cylindrical seat 3 and the other end flows into a cylindrical hole 50 made inside the body means 2.

For instance, the second radial seats 47 can be carried out into the body means 2 through the slots 10.

The geometric axes of the cylindrical hole 50 is parallel and equidistant in respect to the geometric axes of the cylindrical seats 3; in particular the cylindrical hole 50 and the body means 2 are coaxial.

The second radial seats 47 are assigned to house respective sphere means 48, for instance spheres for ball bearing or, in alternative, pieces in form of small cylinders with hemisphere shaped ends.

Each stem means 4 is provided with an annular concave seat 49 whose transversal section is round arch or annular sector shaped.

Each concave seat 49 is assigned to be engaged by a respective sphere means 48 allowing the free rotation of each stem means 4 and stopping the axial sliding thereof 4.

The inner face of the cylindrical hole 50 is threaded forming an axial female threading engaged by a threaded pin 51 having a head 52 conical or ogival shaped and assigned to slidingly match with the sphere means 48 for constraining them 48 into the respective concave seats 49 carried out in the stem means 4.

The cylindrical hole 50 is made in the bottom of the concave socket connection or link 20.

The present embodiment of the device allows to adjust the axial play of the stem means 4 and jaw means 5 and it allows a fast assembly and disassembly of the latter 4, 5.

In the above described embodiments, the portion opened toward the outside of each cylindrical seat 3 has an enlargement 55 cylindrical or frustoconical shaped; said enlargement 55 is assigned to house a respective bevelled portion 56 interposed between each jaw means 5 and the respective cylindrical stem means 4.

Each bevelled portion 56 is cylindrical or frustoconical shaped and is complementary shaped in respect to the corresponding enlargement 55.

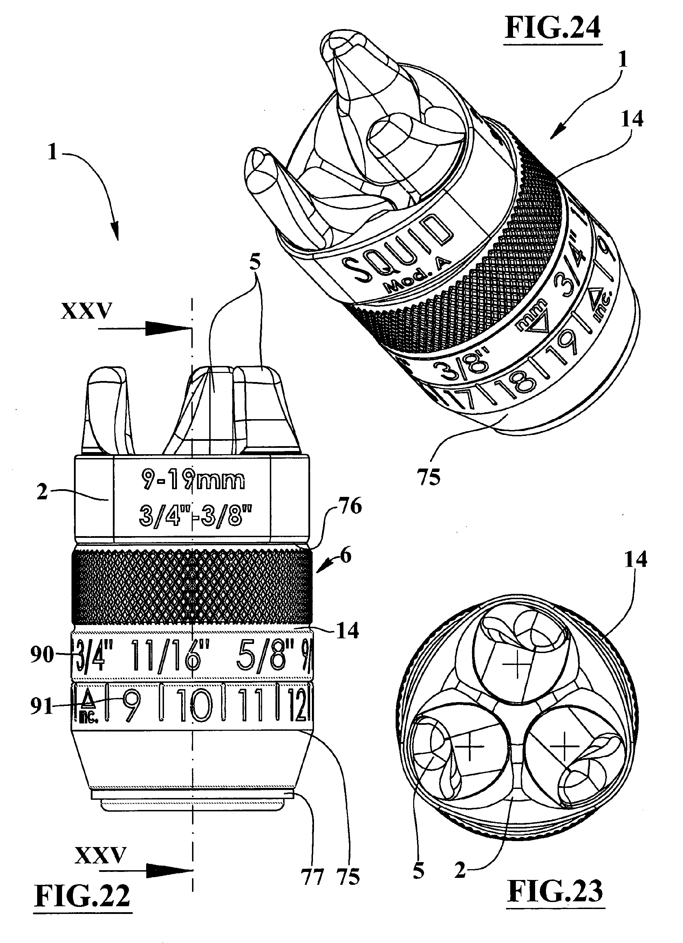

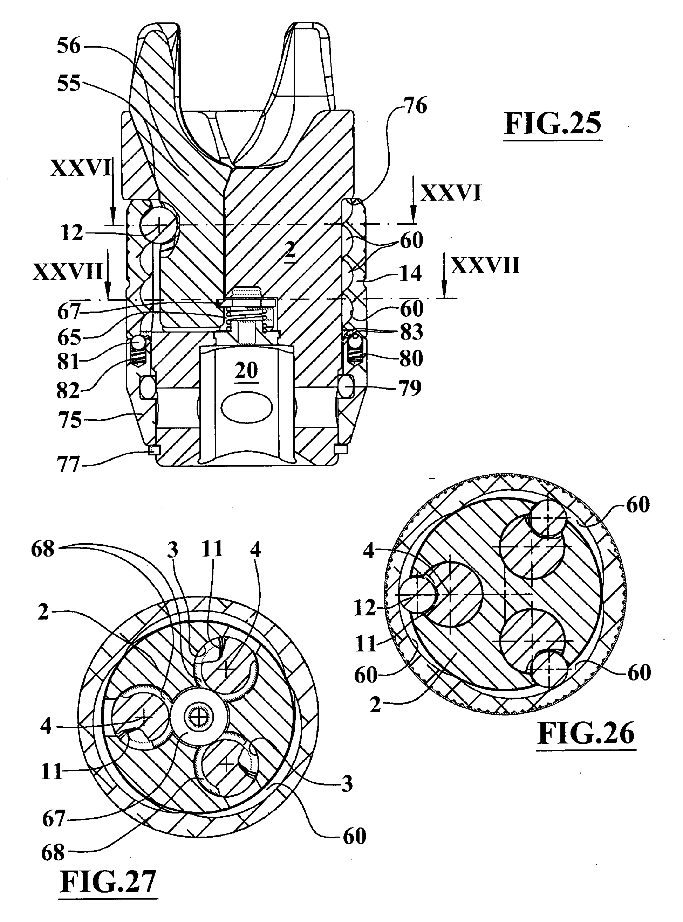

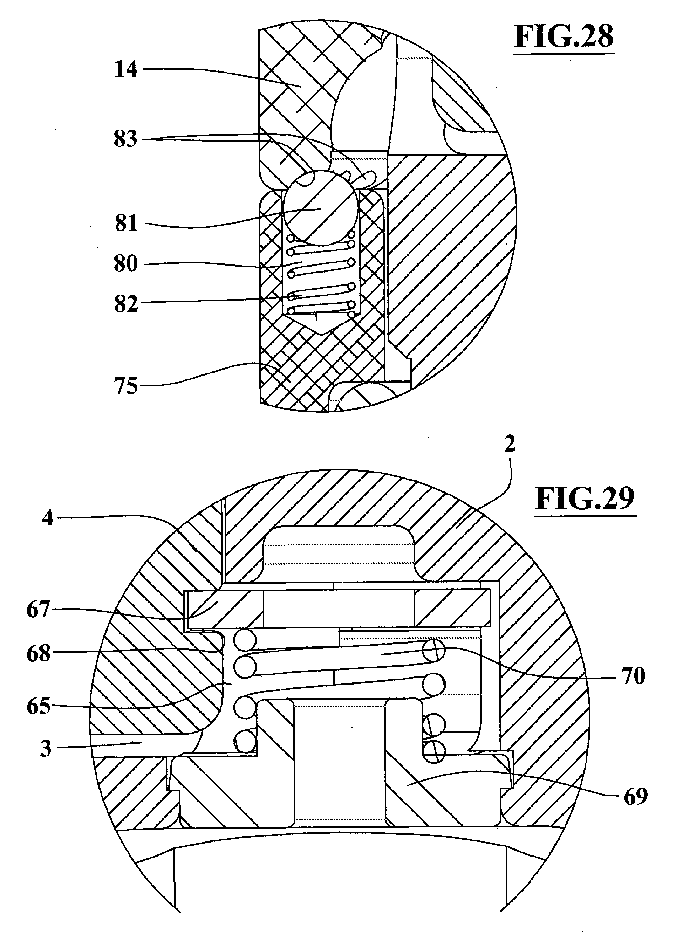

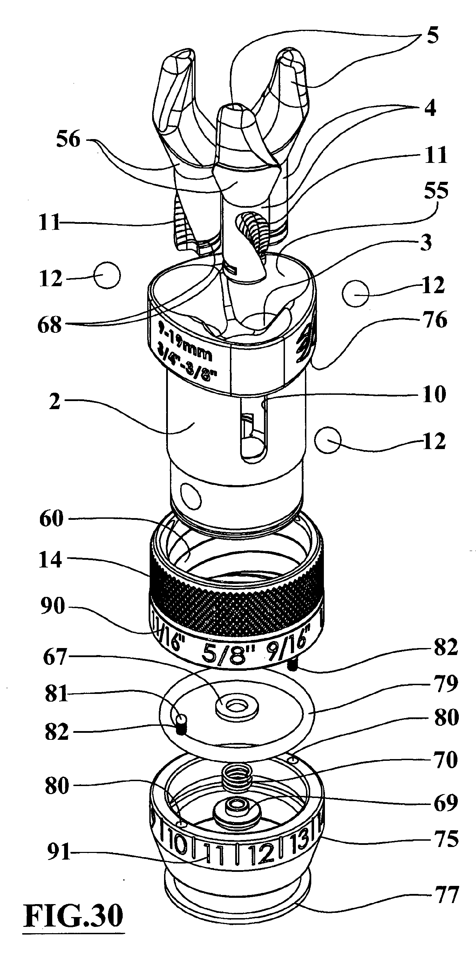

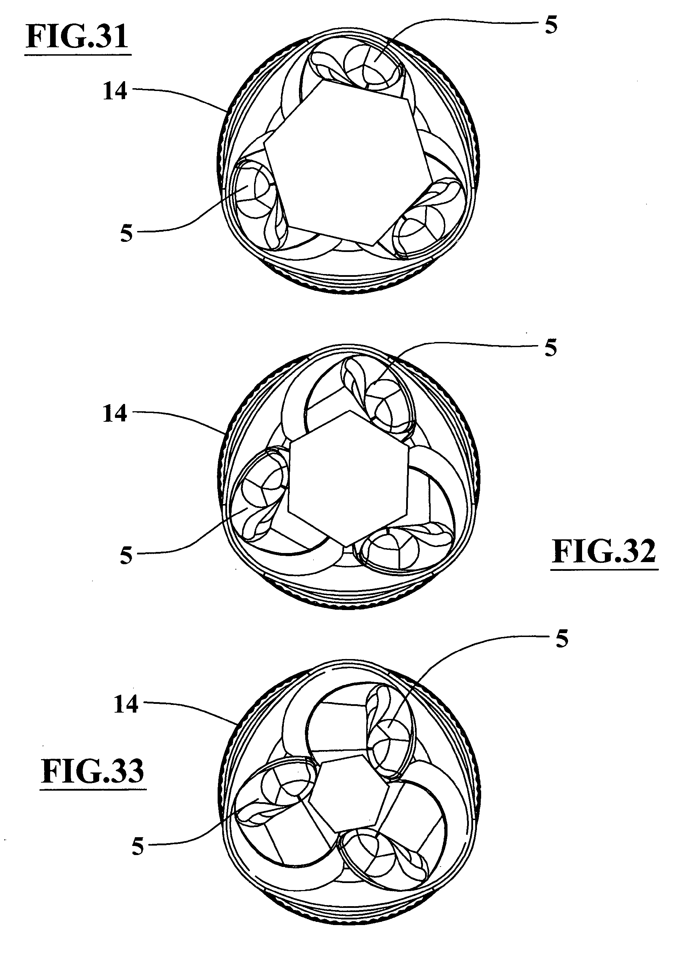

The figures 22 - 33 show the preferred embodiment of the adjustable socket drive device for nuts, bolts, and hexagonal or cylindrical stems or bits in general.

Said preferred embodiment differs from the preceding embodiments mainly because of the following features.

The annular operating means 14 is axially almost blocked and it 14 can rotate around the geometric axis of the body means 2 only.

The inner face of the annular operating means 14 is provided with one helicoidal thread 60 for each coupling means 12 spheres.

The transversal section of each helicoidal thread 60 is concave and complementary to a portion of said coupling means 12 for slidingly housing said portions thereof 12; in particular said transversal section is arch or portion of circumference shaped.

The radius of said arch or portion of circumference is equal to or slightly bigger than the radius of each spheres of said coupling means 12.

The end of the body means 2 opposed to the cylindrical seats 3 is provided with an axial cavity 65, cylindrical shaped, communicating with said cylindrical seats 3 and assigned to house a blocking washer 67 interfering with said cylindrical seats 3 and slidingly engaged into annular scores 68 carried out into the stem means 4.

Said annular scores 68 interfere with the corresponding helicoidal scores 11 for allowing an easy coupling between said blocking washer 67 and said annular scores 68.

The blocking washer 67 thus stops the unwanted taking off of the stem means abutting against the bottom or a proper shoulder made into said axial cavity 65.

The axial cavity 65 for the blocking washer 67 further comprises a housing seat for a closure means 69, for instance consisting of a kind of flange dab joinable into the respective seat made in the axial cavity 65.

The latter axial cavity 65 further houses an elastic means 70 compressed between said closure means 69 and the blocking washer 67 for impressing to the latter 67 a resilient force directed toward the outside of the respective cylindrical seats 3.

Said configuration allows a reduction of the rotation frictions of the stem means 4 during the operations of adjustment of the distance among the jaw means 5 and in absence of axial load.

The preferred embodiment of the device 1 further comprises a tubular member 75, for instance a cylindrical shaped wall, or frustoconical or shaped in form of a cylinder surmounted by the truncated cone.

The tubular member 75 is fixed to the body means 2 and it 75 matches in a freely swivelling manner an end of the operating means 14 blocking the unwanted axial translation cooperating with a shoulder 76 of the body means 2.

Said shoulder 76 slidingly matches the other end of the operating means 14.

The tubular member 75 is axially blocked to the body means 2 by means of a resilient ring 77, for instance a Seeger ring, engaged in a cave annular seat carried out into the end of the body means opposed to the jaw means 5.

Furthermore an annular sealing means 79, for instance an O-Ring, interposed with friction between the body means 2 and the tubular member 75, acts against the rotation of the tubular member 75 in respect to the body means 2.

The end of the tubular member 75 swivelling matching the operating means 14 comprises a set of concave longitudinal seats 80 each housing a respective small sphere 81 and a corresponding elastic means 82 acting against the small sphere 81 for pushing it 81 against scores 83 carried out in the edge of the operating means 14 for elastically blocking it 14 in preset positions.

The preferred embodiment of the device further comprises inch 90 and metric 91 round scales, one carried out onto the operating means 14 and the other onto the tubular member 75 of the body means 2.

In said preferred embodiment of the device 1, the pitch of the helicoidal concave scores 11 is variable and the pitch and lead of the helicoidal threads 60 of the operating means 14 is constant.

In particular, the pitch of the helicoidal concave scores 11 increases in the direction from the end of the stem means 4 carrying the respective jaw means 5 to the opposite end in a manner that the distances among the numeric indexes of the metric scale 91 are constant.

The helicoidal threads 60 and the helicoidal concave scores 11 can be left-handed or, in alternative, right-ended or they can have different oriented hands.

Due to said variable pitch of the helicoidal concave scores 11 and to the jaw means 5 shape, the rotation of the annular operating means 14 for adjusting the jaw means 5 from a metric nut size to an adjacent size is fixed and independent by sizes.

Furthermore, the jaw means 5 are tapered and only the portion assigned to match nuts and bolts of the side surface of the jaw means 5 has straight generatrix parallel to the main axis of the device.

## Claims

1. Adjustable socket drive device for wrench, drill and the like comprising a body means (2) having a plurality of parallel cylindrical seats (3) each assigned to house a respective free rotating cylindrical stem means (4) each having a respective eccentric elongated jaw means (5) protruding outside the cylindrical seats (3); said device (1) further comprising rotating means (6) engaged to the stem means (4) for the rotation of said stem means (4) and of the jaw means (5) adapting the distance between the lasts to accommodate nuts, bolts and stems of different size; said device (1) being **characterized in that** the rotating means (6) comprises a set of slots (10) carried out through the body means (2) and each debouching into respective cylindrical seats (3) and it comprises a set of concave scores (11) each carried out onto a respective stem means (4), said slots (10) and scores (11) are respectively parallel to the geometric axis of the cylindrical seats (3) and helicoidally shaped or vice versa and each slot (10) and the respective score (11) are slidingly engaged by a corresponding coupling means (12) each moved along the respective slot (10) by an operating means (14) to control the rotation of the jaw means (5) and the mutual distance thereof.

2. Device according to claim 1 **characterized in that** the operating means (14) is ring shaped and it is constrained to rotate around the body (2) almost without axial translation, the inner face of said annular operating means (14) is provided with one helicoidal thread (60) for each coupling means (12) where each helicoidal thread (60) has a concave transversal section complementary in respect to a portion of said coupling means (12) for slidingly housing said portion.

3. Device according to claim 1 **characterized in that** the operating means (14) is annular shaped and its internal face is provided with a concave annular groove (13) having concave annular shape with transversal section complementary shaped in respect to a portion of said coupling means (12) for slidingly housing said portion, and said face is equipped with at least one female threading (15) engaged with at least one male thread (16) carried out on the external side of the body means (2) at least close to the slots (10); the rotation of the operating means (14) causes the axial translation thereof and the rotation of the jaw means (5).

4. Device according to claim 2 or 3 **characterized in that** each coupling means (12) is preferably sphere shaped and the transversal section of each helicoidal thread (60) or annular groove (13) is circular arch shaped, the radius of said circular arch is equal or slightly bigger than the radius of said sphere.

5. Device according to claim 1 **characterized in that** the generatrix at least of a matching portion of the side surface of the elongated jaw means (5) are straight and parallel to the main geometric axis of the cylindrical stem means (4) and of the cylindrical seats (3); were in case of hexagonal nuts, bolts and stems, preferably the cylindrical seats (3) are in number of three and the respective main geometric axis orthogonally cut the vertex of an equilateral triangle.

6. Device according to claim 2 **characterized in that** each jaw means (5) is inscribable inside a geometric cylindrical side wall coaxial with the respective stem means (4) and the transversal section of said jaw means (5) is asymmetric and preferably it has three main side forming a sort of triangle, one of said sides consisting of the arch of circumference made by the intersection of the section plane with said geometric cylindrical side wall, and the remaining two sides are bevelled and they have very different length and they are slightly convex curved and they form and intermediate angle of 90° or preferably bigger.

7. Device according to any of the preceding claims **characterized in that** the end of the body means (2) opposed to the cylindrical seats (3) is provided with an axial cavity (65) communicating with said cylindrical seats (3) and assigned to house blocking washer (67), assigned to axially block the stem means (4), slidingly engaged in annular groves (68) of said stem means (4).

8. Device according to any of the claims 1-6 **characterized in that** the body means (2) comprises a set of hollow first radial seats (7) each interfering with one or two cylindrical seats (3) and assigned to be engaged by a respective pin means (8), each stem means (4) is provided with an annular concave seat (9) assigned to be engaged by one or two pin means (8) allowing the free rotation of the each stem means (4) and preventing the axial sliding thereof.

9. Device according to any claims 1 - 6 **characterized in that** the body means (2) comprises a set of hollow second radial seats (47) each having one end ending into the respective cylindrical seat (3) and assigned to house respective sphere means (48), each stem means (4) is provided with an concave seat (49) annular or arch shaped assigned at least to be engaged by one sphere means (48) allowing the free rotation of the each stem means (4) and preventing the axial sliding thereof; the end of each second radial seats (47) opposed to the respective cylindrical seat (3) flows into a cylindrical hole (50) made into the body means (2) and the respective geometric axis is parallel and equidistant to the geometric axis of the cylindrical seats (3); said cylindrical hole (50) is provided with an axial female thread to be axially engaged by a threaded pin (51) whose head (52) is conical or ogival shaped and it is assigned to slidingly match with all the sphere means (48) to engage said sphere means (48) into the respective concave seat (49) made in the stem means (4).

10. Device according to claim 3 **characterized in that** the portions (17) of the external side of the body means (2) interposed between the male threads (16) are almost flattened or slightly concave; at least one of the flattened portions (17) is provided with a scale referring to the axial position of the operating means (14) along the body means (2).

11. Device according to claim 10 **characterized in that** it comprises a set of sliding blocks (30) each interposed between a flattened portions (17) and the annular operating means (14) and complementary shaped in respect to the groove (13) and to the flattened portions (17), each sliding blocks (30) is provided with a radial hole (31) housing a spring (32) and a ball (33) elastically matching with the surface of the groove (13) that is provided with stop holes (34) assigned to detachably stop the ball (33) and the rotation of the annular operating means (14) in predetermined mutual distance among the jaw means (5).

12. Device according to claim 2 **characterized in that** it comprises a tubular member (75) fixed to the body means (2) and freely slidingly matching with one end of the operating means (14) avoiding the axial translation thereof cooperating with a shoulder (76) of the body means (2), where said shoulder (76) freely slidingly matches with the other end of the operating means (14)

13. Device according to claim 12 **characterized in that** it comprises an annular sealing means (79) interposed with friction between the the body means (2) and the tubular member (75); the end of the tubular member (75), matching with the operating means (14) in a rotating manner, comprises a set of longitudinal concave seats (80) each housing a respective small sphere (81) and a corresponding resilient means (82) acting on the respective small sphere (81) for pushing it against scores (83) carried out into the edge of the operating means (14) for detachably blocking it in predetermined positions; said device comprises an inch scale (90) and/or a metric scale (91), one made on the operating means (14) and the other made onto the tubular member (75).

14. Device according to claim 7 **characterized in that** it comprises a closing means (69) blocked into the axial cavity (65), for the blocking washer (67) engaged to the stem means (4), and it comprises an elastic means (70) compressed between said closing means (69) and blocking washer (67) for elastically pushing the latter (67) toward the exit from the respective cylindrical seats (3).

15. Device according to claims 2 and 13 **characterized in that** the portion of each cylindrical seats (3) opened toward the outside has a cylindrical or frustoconical shaped enlargement (55) assigned to house a respective beveled portion (56) interposed between each jaw means (5) and the respective cylindrical stem means (4) and having shape respectively cylindrical or frustoconical complementary to the enlargement (55); the pitch of the helicoidal concave scores (11) is variable and the pitch of the helicoidal threads (60) of the operating means (14) is constant and the pitch of the helicoidal concave scores (11) increases in the direction from the end of the stem means (4) carrying jaw means (5) to the opposite end so the distances among the numeric indexes of the inch scale (90) and/or of the metric scale (91) are constant.

## Patentansprüche

1. Einstellbare Aufnahmeantriebsvorrichtung für Schraubenschlüssel, Bohrer und Ähnliches, umfassend ein Körpermittel (2) mit einer Mehrzahl von parallelen zylindrischen Sitzen (3), die jeweils vorgesehen sind, um ein entsprechendes sich frei drehendes zylindrisches Schaftmittel (4) aufzunehmen, das jeweils ein entsprechendes exzentrisch verlängertes Backenmittel (5) aufweist, das über die Außenseite der zylindrischen Sitze (3) hervorsteht, wobei die Vorrichtung (1) weiterhin sich drehende Mittel (6) aufweist, die mit dem Schaftmittel (4) zur Drehung des Schaftmittels (4) und des Backenmittels (5) in Eingriff stehen und die den Abstand zwischen den Letzteren anpassen, um Nüsse, Bolzen und Stämme verschiedener Größe aufzunehmen, die Vorrichtung (1) ist **dadurch gekennzeichnet, dass** die sich drehenden Mittel (6) einen Satz von Schlitzen (10) aufweist, die durch das Körpermittel (2) ausgeführt sind und jeweils in entsprechende zylindrische Sitze (3) auslaufen, und sie umfasst einen Satz von konkaven Kerben (11), von denen jede auf einem entsprechenden Schaftmittel (4) ausgeführt ist, wobei die Schlitze (10) und Kerben (11) jeweils parallel zur geometrischen Achse der zylindrischen Sitze (3) angeordnet sind und schraubenartig geformt sind oder umgekehrt und jeder Schlitz (10) und die entsprechende Kerbe (11) stehen gleitend mit einem entsprechenden Kupplungsmittel (12) in Eingriff, von denen jedes entlang des entsprechenden Schlitzes (10) durch ein Betriebsmittel (14) bewegt wird, um die Drehung der Backenmittel (5) und den wechselseitigen Abstand davon zu steuern.

2. Vorrichtung gemäß Patentanspruch 1, **dadurch gekennzeichnet, dass** das Betriebsmittel (14) ringförmig ist und gezwungen ist, sich nahezu ohne axiale Bewegung um den Körper (2) zu drehen, wobei die innere Seite des ringförmigen Betriebsmittels (14) mit einem schraubenartigen Gewinde (60) für jedes Kupplungsmittel (12) bereitgestellt ist, wobei jedes schraubenartige Gewinde (60) einen konkaven transversalen Abschnitt aufweist, der in Bezug auf einen Bereich des Kupplungsmittels (12) komplementär ist zum gleitenden Aufnehmen des Bereichs.

3. Vorrichtung gemäß Patentanspruch 1, **dadurch gekennzeichnet, dass** das Betriebsmittel (14) ringförmig ist und seine innere Seite mit einer konkaven ringförmigen Rille (13) bereitgestellt ist, die eine konkave Ringform mit einem transversalen Abschnitt aufweist, der in Bezug auf einen Bereich des Kupplungsmittels (12) komplementär geformt ist zum gleitenden Aufnehmen des Bereichs, und die Seite ist ausgestattet mit mindestens einem weiblichen Gewinde (15), das in Eingriff mit mindestens einem männlichen Gewinde (16) steht, das auf der Außenseite des Körpermittels (2) mindestens nahe den Schlitzen (10) ausgeführt ist, wobei die Drehung des Betriebsmittels (14) die axiale Bewegung davon sowie die Drehung der Backenmittel (5) bewirkt.

4. Vorrichtung gemäß Patentanspruch 2 oder 3, **dadurch gekennzeichnet, dass** jedes Kupplungsmittel (12) vorzugsweise kugelförmig ist und der transversale Abschnitt von jedem schraubenartigen Gewinde (60) oder von jeder ringförmigen Rille (13) kreisbogenförmig ist, wobei der Radius des Kreisbogens gleich oder leicht größer als der Radius der Kugel ist.

5. Vorrichtung gemäß Patentanspruch 1, **dadurch gekennzeichnet, dass** die Mantellinie von mindestens einem passenden Bereich der Seitenoberfläche des verlängerten Backenmittels (5) gerade und parallel zur geometrischen Hauptachse des zylindrischen Schaftmittels (4) und der zylindrischen Sitze (3) ist, wobei im Fall von hexagonalen Nüssen, Bolzen und Stämmen, vorzugsweise die zylindrischen Sitze (3) in einer Anzahl von Dreien vorhanden sind und die entsprechende geometrische Hauptachse den Scheitel eines gleichseitigen Dreiecks orthogonal schneidet.

6. Vorrichtung gemäß Patentanspruch 2, **dadurch gekennzeichnet, dass** jedes Backenmittel (5) innerhalb einer geometrischen zylindrischen Seitenwand beschriftbar ist, die koaxial mit dem entsprechenden Schaftmittel (4) angeordnet ist, und der transversale Abschnitt der Backenmittel ist asymmetrisch und weist vorzugsweise drei Hauptseiten auf, die eine Art von Dreieck bilden, wobei eine der Seiten aus dem Umfangsbogen besteht, der durch den Schnitt der Schnittebene mit der geometrischen zylindrischen Seitenwand entsteht, und die verbleibenden zwei Seiten sind abgeschrägt, weisen sehr verschiedene Längen auf, sind leicht konvex gebogen und bilden einen mittleren Winkel von 90° oder vorzugsweise mehr.

7. Vorrichtung gemäß einem der vorhergehenden Patentansprüche, **dadurch gekennzeichnet, dass** das den zylindrischen Sitzen (3) entgegengesetzte Ende des Körpermittels (2) mit einer axialen Aussparung (65) bereitgestellt ist, die mit den zylindrischen Sitzen (3) in Verbindung steht und vorgesehen ist, um eine Blockierscheibe (67) aufzunehmen, die vorgesehen ist, um das Schaftmittel (4) axial zu blockieren, und die gleitend mit den ringförmigen Rillen (68) des Schaftmittels (4) in Eingriff steht.

8. Vorrichtung gemäß einem der vorhergehenden Patentansprüche 1 bis 6, **dadurch gekennzeichnet, dass** das Körpermittel (2) einen Satz von hohlen ersten radialen Sitzen (7) umfasst, die sich mit einem oder zwei zylindrischen Sitzen (3) überlagern und vorgesehen sind, um mit entsprechenden Stiftmitteln (8) in Eingriff zu stehen, wobei jedes Schaftmittel (4) mit einem ringförmigen konkaven Sitz (9) bereitgestellt ist, der vorgesehen ist, um mit einem oder zwei Stiftmitteln (8) in Eingriff zu stehen, und der die freie Drehung von jedem der Schaftmittel (4) erlaubt und das axiale Gleiten davon verhindert.

9. Vorrichtung gemäß einem der Patentansprüche 1 bis 6, **dadurch gekennzeichnet, dass** das Körpermittel (2) einen Satz von hohlen zweiten radialen Sitzen (47) umfasst, von denen jeder ein Ende aufweist, das in dem entsprechenden zylindrischen Sitz (3) endet und vorgesehen ist, um entsprechende Kugelmittel (48) aufzunehmen, wobei jedes Schaftmittel (4) mit einem konkaven Sitz (49) bereitgestellt ist, der ringförmig oder bogenförmig ist und vorgesehen ist, um mindestens mit einem Kugelmittel (48) in Eingriff zu stehen, und der die freie Drehung von jedem der Schaftmittel (4) erlaubt und das axiale Gleiten davon verhindert, wobei das dem entsprechenden zylindrischen Sitz (3) entgegengesetzte Ende von jedem zweiten radialen Sitz (47) in ein zylindrisches Loch (50) fließt, das in dem Körpermittel (2) hergestellt ist, und die entsprechende geometrische Achse ist parallel und in gleichem Abstand zu der geometrischen Achse des zylindrischen Sitzes (3) angeordnet, wobei das zylindrische Loch (50) mit einem axialen weiblichen Gewinde bereitgestellt ist, das axial mit einem Gewindestift (51) in Eingriff stehen soll, dessen Kopf (52) konisch oder spitzbögig geformt ist, und das zylindrische Loch (50) ist vorgesehen, um gleitend mit allen Kugelmitteln (48) zusammenzupassen, um mit den Kugelmitteln (48) in dem entsprechenden konkaven Sitz (49) in Eingriff zu stehen, der in den Schaftmitteln (4) hergestellt ist.

10. Vorrichtung gemäß Patentanspruch 3, **dadurch gekennzeichnet, dass** der Bereich (17) der Außenseite des Körpermittels (2), der zwischen den männlichen Gewinden (16) angeordnet ist, nahezu abgeflacht oder leicht konkav ist, wobei mindestens einer der abgeflachten Bereiche (17) mit einer Skala bereitgestellt ist, die sich auf die axiale Position des Betriebsmittels (14) entlang des Körpermittels (2) bezieht.

11. Vorrichtung gemäß Patentanspruch 10, **dadurch gekennzeichnet, dass** sie einen Satz von Gleitblöcken (30) umfasst, von denen jeder zwischen einem abgeflachten Bereich (17) und den ringförmigen Betriebsmitteln (14) angeordnet und in Bezug auf die Rille (13) und die abgeflachten Bereiche (17) komplementär geformt ist, wobei jeder Gleitblock (30) bereitgestellt ist mit einem radialen Loch (31), das eine Feder (32) sowie einen Ball (33) aufnimmt, die elastisch mit der Oberfläche der Rille zusammenpassen, die mit Anschlaglöchern (34) ausgestattet ist, die vorgesehen sind, um den Ball (33) und die Drehung der ringförmigen Betriebsmittel (14) in vorbestimmtem wechselseitigen Abstand zwischen den Backenmitteln (5) lösbar zu stoppen.

12. Vorrichtung gemäß Patentanspruch 2, **dadurch gekennzeichnet, dass** sie ein rohrförmiges Element (75) umfasst, das an den Körpermitteln (2) befestigt und frei gleitend mit einem Ende des Betriebsmittels (14) zusammenpasst, das die axiale Bewegung davon vermeidet und mit einer Schulter (76) der Körpermittel (2) zusammenarbeitet, wobei die Schulter (76) frei gleitend mit dem anderen Ende des Betriebsmittels (14) zusammenpasst.

13. Vorrichtung gemäß Patentanspruch 12, **dadurch gekennzeichnet, dass** sie ein ringförmiges Dichtmittel (79) umfasst, das mit Reibung zwischen dem Körpermittel (2) und dem rohrförmigen Element (75) angeordnet ist, wobei das Ende des rohrförmigen Elements (75), das mit dem Betriebsmittel (14) in einer sich drehenden Weise zusammenpasst, einen Satz von länglichen konkaven Sitzen (80) umfasst, die jeweils eine entsprechende kleine Kugel (81) sowie ein entsprechendes flexibles Mittel (82) aufnehmen, das auf die entsprechende kleine Kugel (81) zum Drücken davon gegen die Kerben (83) wirkt, die in dem Rand des Betriebsmittels (14) zum lösbaren Blockieren davon in vorbestimmten Positionen ausgeführt sind, wobei die Vorrichtung eine Inch-Skala (90) und / oder eine metrische Skala (91) umfasst, wobei eine auf dem Betriebsmittel (14) und die andere auf dem rohrförmigen Element (75) hergestellt ist.

14. Vorrichtung gemäß Patentanspruch 7, **dadurch gekennzeichnet, dass** sie ein Schließmittel (69) für die mit dem Schaftmittel (4) in Eingriff stehende Blockierscheibe (67) umfasst, das in der axialen Aussparung (65) blockiert ist, und sie umfasst ein elastisches Mittel (70), das zwischen dem Schließmittel (69) und der Blockierscheibe (67) zum elastischen Drücken der Letzteren (67) in Richtung des Ausgangs von dem entsprechenden zylindrischen Sitz (3) zusammengedrückt ist.

15. Vorrichtung gemäß den Patentansprüchen 2 und 13, **dadurch gekennzeichnet, dass** der Bereich von jedem zylindrischen Sitz (3), der in Richtung der Außenseite geöffnet ist, eine zylindrische oder kegelstumpfförmige Vergrößerung (55) aufweist, die vorgesehen ist, um einen entsprechenden abgeschrägten Bereich (56) aufzunehmen, der zwischen jedem Backenmittel (5) und dem entsprechenden zylindrischen Schaftmittel (4) angeordnet ist und eine Form aufweist, die entsprechend zylindrisch oder kegelstumpfförmig komplementär zur Vergrößerung (55) ist, wobei die Steigung der schraubenförmigen konkaven Kerben (11) variabel ist und die Steigung der schraubenförmigen Gewinde (60) des Betriebsmittels (14) konstant ist und die Steigung der schraubenförmigen konkaven Kerben (11) in Richtung von dem Ende des Schaftmittels (4), das die Backenmittel (5) trägt, zu dem entgegengesetzten Ende zunimmt, sodass der Abstand zwischen den numerischen Indizes der Inch-Skala (90) und / oder der metrischen Skala (91) konstant ist.

## Revendications

1. Dispositif réglable d'entraînement à douille pour clé, pour foret et similaire, comprenant un moyen formant corps (2) présentant une pluralité de sièges cylindriques parallèles (3), chacun d'eux étant destiné à recevoir des moyens respectifs à tiges cylindriques tournant librement (4), chacun d'eux présentant des moyens respectifs formant mâchoire allongée excentrique (5) faisant saillie à l'extérieur des sièges cylindriques (3) ; ledit dispositif (1) comprenant en outre des moyens de rotation (6) mis en prise avec les moyens à tiges (4), pour la rotation desdits moyens formant à tiges (4) et pour le moyen formant mâchoire (5) en adaptant la distance entre ces derniers pour recevoir des écrous, des boulons et des tiges de différentes tailles ; ledit dispositif (1) étant **caractérisé en ce que** les moyens de rotation (6) comprennent un ensemble de fentes (10) réalisées à travers le moyen formant corps (2), chacune d'elles débouchant dans les sièges cylindriques respectifs (3), et **en ce qu'**il comprend un ensemble d'entailles concaves (11), chacune d'elles étant réalisée sur les moyens respectifs à tiges (4), lesdites fentes (10) et lesdites entailles (11) étant respectivement parallèles à l'axe géométrique des sièges cylindriques (3) et étant d'une forme hélicoïdale ou vice versa, et chaque fente (10) et les entailles respectives (11) étant mises en prise de manière coulissante par des moyens de couplage correspondants (12), chacun d'eux étant déplacé le long de la fente respective (10) par un moyen opérationnel (14) pour commander la rotation du moyen formant mâchoire (5) et la distance mutuelle de ceux-ci.

2. Dispositif selon la revendication 1, **caractérisé en ce que** le moyen opérationnel (14) est annulaire et **en ce qu'**il est forcé de tourner autour du corps (2) pratiquement sans translation axiale, la face intérieure dudit moyen opérationnel annulaire (14) étant dotée d'un filet hélicoïdal (60) destiné à chacun des moyens de couplage (12), dans lequel chaque filet hélicoïdal (60) présente une section transversale concave complémentaire par rapport à une partie desdits moyens de couplage (12) de façon à recevoir de manière coulissante ladite partie.

3. Dispositif selon la revendication 1, **caractérisé en ce que** le moyen opérationnel (14) est annulaire et sa face intérieure est dotée d'une rainure annulaire concave (13) qui présente une forme annulaire concave avec une section transversale dont la forme est complémentaire par rapport à celle d'une partie desdits moyens de couplage (12) destinée à recevoir de manière coulissante ladite partie, et ladite face est équipée d'au moins un filetage femelle (15), mis en prise avec au moins un filet mâle (16), réalisé sur le côté extérieur du moyen formant corps (2) à proximité au moins des fentes (10) ; la rotation du moyen opérationnel (14) provoque sa translation axiale et la rotation du moyen formant mâchoire (5).

4. Dispositif selon la revendication 2 ou 3, **caractérisé en ce que** chaque moyen de couplage (12) est de préférence sphérique et la section transversale de chaque filet hélicoïdal (60) ou de chaque rainure annulaire (13) a une forme d'arc de cercle, le rayon dudit arc de cercle étant égal ou légèrement supérieur au rayon de ladite sphère.

5. Dispositif selon la revendication 1, **caractérisé en ce que** la génératrice d'au moins une partie correspondante de la surface latérale du moyen formant mâchoire allongée (5), est droite et parallèle à l'axe géométrique principal des moyens à tiges cylindriques (4) et des sièges cylindriques (3) ; dans lequel, dans le cas d'écrous, de boulons et de tiges hexagonaux, les sièges cylindriques (3) sont de préférence au nombre de trois, et l'axe géométrique principal respectif coupe de manière orthogonale le sommet d'un triangle équilatéral.

6. Dispositif selon la revendication 2, **caractérisé en ce que** chaque moyen formant mâchoire (5) peut s'inscrire à l'intérieur d'une paroi latérale cylindrique géométrique coaxiale avec les moyens respectifs à tiges (4) et la section transversale dudit moyen formant mâchoire (5) est asymétrique et présente de préférence trois côtés principaux qui forment une sorte de triangle, l'un desdits côtés consiste en l'arc de circonférence provenant de l'intersection du plan de section avec ladite paroi latérale cylindrique géométrique, et les deux autres côtés sont biseautés et présentent des longueurs très différentes, et ils présentent une forme incurvée légèrement convexe et ils forment un angle intermédiaire égal ou de préférence supérieur à 90°.

7. Dispositif selon l'une quelconque des revendications précédentes, **caractérisé en ce que** l'extrémité du moyen formant corps (2) opposée aux sièges cylindriques (3) est dotée d'une cavité axiale (65) qui communique avec lesdits sièges cylindriques (3) et qui est destinée à recevoir une rondelle de blocage (67), destinée à bloquer axialement les moyens à tiges (4), mise en prise de manière coulissante dans des rainures annulaires (68) desdits moyens à tiges (4).

8. Dispositif selon l'une quelconque des revendications 1 à 6, **caractérisé en ce que** le moyen formant corps (2) comprend un ensemble de premiers sièges radiaux creux (7), chacun d'eux interférant avec un ou deux sièges cylindriques (3) et étant destiné à être mis en prise par des moyens respectifs formant broches (8), chacun des moyens à tiges (4) étant doté d'un siège concave annulaire (9) destiné à être mis en prise par un ou deux moyens formant broches (8), en permettant la rotation libre de chacun des moyens à tiges (4) et en empêchant leur coulissement axial.

9. Dispositif selon l'une quelconque des revendications 1-6, **caractérisé en ce que** le moyen formant corps (2) comprend un ensemble de seconds sièges radiaux creux (47), chacun d'eux présentant une extrémité qui se termine dans le siège cylindrique respectif (3) et étant destiné à recevoir des moyens respectifs formant sphères (48), chacun des moyens formant tiges (4) étant doté d'un siège concave (49) annulaire ou arqué, destiné à être mis en prise par au moins l'un des moyens formant sphères (48), en permettant la rotation libre de chaque moyen à tiges (4) et en empêchant leur coulissement axial ; l'extrémité de chacun des seconds sièges radiaux (47) opposée au siège cylindrique respectif (3) pénètre dans un trou cylindrique (50) réalisé dans le moyen formant corps (2) et l'axe géométrique respectif est parallèle et équidistant à l'axe géométrique des sièges cylindriques (3) ; ledit trou cylindrique (50) est doté d'un filet femelle axial destiné à être mis en prise axialement par une broche filetée (51) dont la tête (52) est conique ou ogivale et destiné à correspondre de manière coulissante avec tous les moyens formant sphères (48) pour venir en prise avec lesdits moyens formant sphères (48) dans le siège concave respectif (49) réalisé dans les moyens à tiges (4).

10. Dispositif selon la revendication 3, **caractérisé en ce que** les parties (17) du côté extérieur du moyen formant corps (2) interposé entre les filets mâles (16) sont presque aplaties ou légèrement concaves ; au moins l'une des parties aplaties (17) est pourvue d'une échelle qui se rapporte à la position axiale du moyen opérationnel (14) le long du moyen formant corps (2).

11. Dispositif selon la revendication 10, **caractérisé en ce qu'**il comprend un ensemble de blocs coulissants (30), chacun d'eux étant interposé entre une partie aplatie (17) et le moyen opérationnel annulaire (14) et présentant une forme complémentaire de celle de la rainure (13) et des parties aplaties (17), chacun des blocs coulissants (30) étant doté d'un trou radial (31) logeant un ressort (32) et une bille (33) correspondant de manière élastique à la surface de la rainure (13) qui est dotée de trous d'arrêt (34) destinés à arrêter la bille (33) de manière libérable et la rotation des moyens opérationnels annulaires (14) à une distance mutuelle prédéterminée parmi le moyen formant mâchoire (5).

12. Dispositif selon la revendication 2, **caractérisé en ce qu'**il comprend un élément tubulaire (75) fixé sur le moyen formant corps (2) et correspondant de manière coulissante et libre à une extrémité du moyen opérationnel (14) en évitant sa translation axiale en coopérant avec un épaulement (76) du moyen formant corps (2), dans lequel ledit épaulement (76) correspond à l'autre extrémité du moyen opérationnel (14) librement et de manière coulissante.

13. Dispositif selon la revendication 12, **caractérisé en ce qu'**il comprend des moyens d'étanchéité annulaires (79) interposés avec frottement entre le moyens formant corps (2) et le membre tubulaire (75) ; l'extrémité du membre tubulaire (75), correspondant au moyen opérationnel (14) d'une manière rotative, comprend un ensemble de sièges concaves longitudinaux (80), chacun d'eux logeant une petite sphère (81) respective et des moyens élastiques (82) correspondants qui agissent sur la petite sphère (81) respective, pour la pousser contre des entailles (83) réalisées dans le bord du moyen opérationnel (14) de façon à la bloquer de manière libérable dans des positions prédéterminées ; ledit dispositif comprend une échelle en pouces (90) et / ou une échelle métrique (91), l'une étant réalisée sur le moyen opérationnel (14) et l'autre étant réalisée sur le membre tubulaire (75).

14. Dispositif selon la revendication 7, **caractérisé en ce qu'**il comprend un moyen de fermeture (69) bloqué dans la cavité axiale (65), de la rondelle de blocage (67) mise en prise avec les moyens à tiges (4), et **en ce qu'**il comprend des moyens élastiques (70) comprimés entre ledit moyen de fermeture (69) et la rondelle de blocage (67) destinés à pousser de manière élastique cette dernière (67) vers la sortie à partir des sièges cylindriques (3) respectifs.

15. Dispositif selon les revendications 2 et 13, **caractérisé en ce que** la partie de chacun des sièges cylindriques (3) ouverte vers l'extérieur présente un élargissement cylindrique ou tronconique (55) destiné à recevoir une partie biseautée respective (56) interposée entre chaque moyen formant mâchoire (5) et les moyens à tiges (4) cylindriques respectifs et présentant une forme respectivement cylindrique ou tronconique complémentaire de celle de l'élargissement (55) ; le pas des entailles concaves hélicoïdales (11) est variable et le pas des filets hélicoïdaux (60) du moyen opérationnel (14) est constant, et le pas des entailles concaves hélicoïdales (11) augmente dans la direction partant de l'extrémité des moyens à tiges (4) qui portent le moyen formant mâchoire (5) jusqu'à l'extrémité opposée, de telle sorte que les distances entre les repères numériques de l'échelle en pouces (90) et / ou de l'échelle métrique (91) soient constantes.
